# EUROPÄISCHE PATENTSCHRIFT

(11) **EP 0 441 788 B1**
(45) Veröffentlichungstag und Bekanntmachung des Hinweises auf die Patenterteilung: **10.03.1993**
(21) Anmeldenummer: 89909156.5
(22) Anmeldetag: 19.08.1989
(51) Int. Cl.: C10J 3/66

(54) **ALLOTHERMES VERFAHREN ZUR ERZEUGUNG EINES BRENNGASES AUS MÜLL ODER AUS MÜLL ZUSAMMEN MIT KOHLE UND VORRICHTUNG ZUR DURCHFÜHRUNG DES VERFAHRENS**
DEVICE AND ALLOTHERMIC PROCESS FOR PRODUCING A BURNABLE GAS FROM REFUSE OR FROM REFUSE TOGETHER WITH COAL
PROCEDE ALLOTHERMIQUE POUR PRODUIRE UN GAZ COMBUSTIBLE A PARTIR D'ORDURES MENAGERES OU D'ORDURES MENAGERES CONJOINTEMENT AVEC DU CHARBON, ET DISPOSITIF PERMETTANT LA MISE EN UVRE DU PROCEDE

(30) Priorität: 23.08.1988 DE 3828534
(43) Veröffentlichungstag der Anmeldung: 21.08.1991
(73) Patentinhaber: RÖSSLE, Gottfried, D-71640 Ludwigsburg (DE)
(72) Erfinder: RÖSSLE, Gottfried, D-71640 Ludwigsburg (DE)
(74) Vertreter: KOHLER SCHMID + PARTNER
(86) Internationale Anmeldenummer: DE8900545
(87) Internationale Veröffentlichungsnummer: WO9002162

(56) Entgegenhaltungen:
- WO-A-88/02769
- DE-A- 2 943 309
- DE-A- 3 004 111
- DE-A- 3 228 532
- DE-A- 3 433 238
- GB-A- 2 069 861

## Beschreibung

Die Erfindung betrifft ein Verfahren zur Erzeugung eines für die öffentliche Versorgung geeigneten Brenngases aus Müll oder aus Müll zusammen mit Kohle.

Als Müll wird hier energiehaltiger Müll, z. B. Hausmüll und anderer Müll, wie Industriemüll, angesehen. Auch z.B. Holzabfälle oder andere Arten von Biomasse gehören hierzu. Energiehaltiger Müll bedeutet hier kohlenstoffhaltiger Müll.

Zur thermischen Verwertung von Müll sind im wesentlichen drei verschiedene Verfahren bekannt:
1. Müllverbrennung
2. Müllverschwelung
   a) mit anschließender Verbrennung der Verschwelungsprodukte
   b) mit anschließender Veredelung und Verbrennung des Schwelgases

Es werden die drei bekannten Verfahren in ihren typischen Ausformungen beschrieben und ihre nachteiligen Ergebnisse und Auswirkungen dargelegt:
1. Müllverbrennung
   . Der Müll wird in einer Feuerungsanlage verbrannt und die im Rauchgas enthaltene Wärme wird auf einen Dampfkessel übertragen.
   . Aus der im Dampf enthaltenen Energie wird Elektrizität und Fernwärme gewonnen.
   . Eine aufwendige elektrische Fernverteilung und ein aufwendiges Fernwärmenetz sind erforderlich.
   . Der Wirkungsgrad der Elektrizitätserzeugung ist wegen der unsünstigen Handhabungseigenschaften des Mülls gering.
   . Es können an wiederverwertbaren Bestandteilen im wesentlichen nur stückige Ferrometalle ausgeschieden und der Wiederverwendung zugeführt werden.
   . Alle übrigen Metalle gelangen in die Verbrennung.
   . Die reaktiven Stoffe, z.B. Schwefel und Schwermetalle, gehen - begünstigt durch den erforderlichen hohen Luftüberschuss - in die meist giftige Oxidform über und müssen in einem aufwendigen Reinigungsprozess aus dem - wegen des Luftüberschusses - sehr großvolumigen Rauchgas entfernt werden.
   . Es bildet sich Schwefeldioxid, welches unter Zugabe von Kalk in Gips verwandelt wird, der sodann aufwendig entsorgt werden muss.
   . Die Entstickung gestaltet sich schwierig, da im Rauchgas noch enthaltene Katalysatorgifte die Standzeiten der Katalysatoren stark beeinträchtigen.
   . Es können nach dem Stand der Technik noch keine Entstickungsanlagen für die Müllverbrennung angeboten werden.
   . Die in großen Höhen abgegebenen Stickoxide bilden unter Sonneneinwirkung Photooxidantien (Ozon) und tragen damit zum Waldsterben bei.
   . Durch den hohen Sauerstoffüberschuss bei Anwesenheit zahlreicher anderer chemischer Stoffe besteht auch die Gefahr, dass sich extrem giftige organische Schadstoffe (z. B. Dioxine) bilden.
2. Müllverschwelung
   . Der Müll wird in einem Schwelgaserzeuger (durch Röhrenwärmetauscher beheizte Drehtrommel) bei einer Temperatur von etwa 450 Grad C unter Ausschluss von Luft bzw. Sauerstoff (allotherm) ohne Vergasungsmittel verschwelt, wodurch ein Schwelgas entsteht.
   . Vor dem Schwelprozess können die Ferrometalle und nach dem Schwelprozess praktisch sämtliche Metalle abgeschieden werden, ferner Inertien (Steine, Glas).
   . Die Bildung giftiger Oxide und giftiger organischer Verbindungen ist durch die allotherme Verfahrensweise ausgeschlossen.
   . Die Metalle erhalten in der reduzierenden Atmosphäre der Schweltrommel ihre metalltypische Oberfläche und können nach Trennung vom Verschwelungsreststoff einer Wiederverwertung zugeführt werden.

a) mit anschließender Verbrennung der Verschwelungsprodukte
   . Der Verschwelungsreststoff wird in einer Mühle gemahlen, zusammen mit dem Schwelgas in einer Hochtemperatur-Schmelzkammer kammer-Feuerung verbrannt, und die im Rauchgas enthaltene Wärme wird auf einen Dampfkessel übertragen.
   . Aus der im Dampf enthaltenen Energie wird Elektrizität und Fernwärme gewonnen.
   . Eine aufwendige elektrische Fernverteilung und ein aufwendiges Fernwärmenetz sind erforderlich.
   . Der Wirkungsgrad der Elektrizitätserzeugung ist wegen der besseren Handhabunsseigenschaften der Verschwelungsprodukte im Vergleich zum Müll günstiger zu beurteilen als im Verfahren 1.
   . Bei der Verbrennung gehen Bestandteile des Verschwelungsreststoffs in die meist giftige Oxidform über und müssen in einem aufwendigen Reinigungsprozess aus einem auch bei diesem Verfahren - trotz des geringeren Luftüberschusses - noch recht großvolumigen Rauchgas entfernt werden.
   . Es bildet sich Schwefeldioxid, welches unter Zugabe von Kalk in Gips verwandelt wird, der sodann aufwendig entsorgt werden muss.
   . Durch die Hochtemperaturverbrennung fallen in großer Menge Stickoxide an.
   . Die Entstickung von Hochtemperatur-Schmelzkammer-Feuerungen ist noch nicht befriedigend gelöst.
   . Die in großen Höhen abgegebenen Stickoxide bilden unter Sonneneinwirkung Photooxidantien (Ozon) und tragen damit zum Waldsterben bei.
b) mit anschließender Veredelung und Verbrennung des Schwelgases
   . Das Schwelgas wird durch Teilverbrennung (autotherm) unter Zufuhr von Luft veredelt und das so entstandene Rohsas wird gereinigt. Bei der Veredelung werden großmolekulare Kohlenstoffverbindungen in kleinmolekulare Kohlenstoffverbindungen überführt.
   . Das Reingas ist - wegen des in der Veredelungsstufe aufgenommenen Stickstoffs - ein Schwachgas und kann nicht für die öffentliche Versorgung verwendet werden.
   . Das Reingas kann nur an Ort und Stelle in Elektrizität und Fernwärme umgesetzt werden.
   . Eine aufwendige elektrische Fernverteilung und ein aufwendiges Fernwärmenetz sind erforderlich.
   . Der Verschwelungsreststoff, der noch einen großen Teil des Energiegehalts des Aufgabemülls enthält, kann - wegen der zu erwartenden Schadstoffbelastung - nicht weiter thermisch verwertet werden.
   . Der energetische Wirkungsgrad des Verfahrens ist deshalb gering.
   . In der Veredelungsstufe wird das Gasvolumen vergrößert, wodurch auch die Reinigungsanlagen entsprechend ein größeres Volumen erfordern.
   . Durch die (unterstöchiometrische) Luftzufuhr kommt es jedoch kaum zu unerwünschten Oxidationen.
   . Schwefel kommt im Rohgas praktisch nur als Schwefelwasserstoff vor und lässt sich durch einfache Schwefelwäsche auswaschen.
   . Es kann elementarer Schwefel von hoher Reinheit gewonnen werden.
   . Stickoxide fallen - dank der möglichen katalytischen Reduktion - bei der Verbrennung des Reingases nur in geringer Menge an.

Aus der DE-C-3 433 238 ist ein Verfahren zur autothermen Wirbelschichtvergasung von Müll zusammen mit anderen Brennstoffen und eine Einrichtung zur Durchführung des Verfahrens bekannt. Der von anorganischem Material befreite Müll wird nach einer Wärmevorbehandlung und Trocknung zerkleinert und mit seinen gasförmigen Reaktionsprodukten der Wirbelschichtvergasung zugegeben. Dabei wird der Müll durch aus der Wirbelschichtvergasung rückgeführtes Rohgas getrocknet und der Zusatzbrennstoff der Wirbelschicht in Form von Kohle bzw. auf gleiche Weise behandeltem, getrocknetem Stroh, Holz oder Bagasse gesondert zugeführt. Dem bekannten Verfahren liegt die Aufgabe zugrunde, Müll durch Trocknung so aufzubereiten und homogenisieren, daß er durch eine an sich bekannte autotherme Wirbelschichtvergasung verwertet werden kann.

Demzufolge geht der eigentlichen Müll-Wirbelschichtvergasung eine Reihe von Trocknungschritten und ein Zerkleinerungsschritt voraus. Dem bekannten Wirbelschichtvergaser wird getrockneter Müll mit sämtlichen Balaststoffen und auch mit den separierbaren Wertstoffen zusammen mit einem Zusatzbrennstoff eingegeben. Dieser Zusatzbrennstoff ist verfahrensbedingt erforderlich.

Das der Wirbelschichtvergasung vorgeschaltete Trocknungsverfahren ist konstruktiv und hinsichtlich des Wärmeaustausches vollkommen anders gestaltet also eine allotherme Verschwelung.

Zur thermischen Verwertung von Kohle ist eine allotherme Kohle-Wasserdampf-Wirbelschichtvergasung bekannt (WO 88/02769).
. Bei diesem Verfahren wird Kohlestaub bei einer Temperatur von etwa 850 Grad C unter Ausschluss von Luft bzw. Sauerstoff in einem von außen beheizten Rohgaserzeuger (Wasserdampf-Wirbelschicht-Vergasungsreaktor mit Röhrenwärmetauscher) ausschließlich mit Wasserdampf als Vergasungsmittel zu einem Rohgas vergast.

Der Erfindung liegt die Aufgabe zugrunde, eine komplette Konfiguration von Verschwelungs-, Vergasungs- und Verbrennungsstufen anzugeben, die es ermöglichen, ein energiereiches, über weite Strecken transportierbares und für die öffentliche Versorgung geeignetes Gas ohne einen Konzentrierungsprozeß aus Müll oder aus Müll zusammen mit Kohle zu erzeugen und dabei die im Müll enthaltenen Wertstoffe, beispielsweise Metalle auf thermische Weise zu isolieren und zurückzugewinnen.

Das erfindungsgemäße Verfahren zur Erzeugung eines für die öffentliche Versorgung geeigneten Brenngases aus energiehaltigem Müll oder aus energiehaltigem Müll zusammen mit Kohle, besteht darin, dass
- aus dem Müll in einem von außen beheizten Schwelgaserzeuger unter Abschluss von Luft bzw. Sauerstoff (allotherm) ohne Vergasungsmittel ein Schwelgas und ein Verschwelungsreststoff erzeugt werden,
- der Verschwelungsreststoff ohne Kohle oder mit einer beliebigen Menge beigemischter Kohle in einer Mühle zu einem feinkörnigen Mahlgut, nachfolgend als Staub bezeichnet, vermahlen wird,
- aus dem Schwelgas und dem Staub in einem von außen beheizten Rohgaserzeuger unter Abschluss von Luft bzw. Sauerstoff (allotherm) mit Wasser als Vergasungsmittel ein Rohgas und ein Vergasungsreststoff erzeugt werden, wobei die fühlbare Wärme des Rohgases zur Beheizung des Schwelgaserzeugers und zur Erhitzung des aus dem Wasser erzeugten Prozessdampfes verwendet wird,
- aus dem Rohgas durch Reinigung ein Reingas erzeugt wird,
- und aus dem Vergasungsreststoff in einer Vergasungsreststoff-Brennkammer ein Rauchgas (Wärmeträgergas) erzeugt wird.

Die erfindungsgemäße Vorrichtung ist dadurch gekennzeichnet, dass sie einen allothermen (unter Abschluss von Luft bzw. Sauerstoff arbeitenden und mit Wärmetauscher zur Eintragung der Prozesswärme ausgestatteten) Schwelgaserzeuger, einen allothermen Rohgaserzeuger und eine Vergasungsreststoff-Brennkammer aufweist.

Da beim Verschwelen keine Luft oder Sauerstoff zugeführt wird, kann das Verschwelen ohne Erzeugung von großen Strömungsgeschwindigkeiten oder Turbulenzen im Schwelgas ausgeführt werden, so daß das der Verschwelungsstufe entnommene Schwelgas nur wenig staubförmige Bestandteile enthält. Falls erforderlich, kann eine weitere Mühle zum Mahlen von Kohle vorgesehen werden oder fertig angelieferter Kohlestaub zugesetzt werden.

In der Vergasungsvorrichtung wird das Schwelgas weiter umgesetzt. Ein Vorteil liegt darin, daß ein einheitliches Gas als einziges gasförmiges Endprodukt des Verfahrens erzeugt wird.

Die Vergasung kann unter einem Druck von etwa 20 bar erfolgen, es kann aber auch ein verringerter Druck von vorzugsweise weniger als 20 bar, oder vorzugsweise auch weniger als 10 bar, oder vorzugsweise etwa bei Atmosphärendruck erfolgen. Je näher der Druck innerhalb der Vergasungsvorrichtung an dem Atmosphärendruck liegt, umso einfacher ist eine derartige Vorrichtung im Aufbau, weil entweder überhaupt kein Druckbehälter oder ein Druckbehälter für nur relativ geringen Überdruck benötigt wird. Außerdem werden bei Verwendung von Atmosphärendruck in der Vergasungsvorrichtung keine aufwendigen Verdichtervorrichtungen zum Fördern des Schwelgases unter hohem Druck in die Vergasungsvorrichtung benötigt.

Das erfindungsgemäße Verfahren und die Vorrichtung sind gegenüber anderen Verfahren der thermischen Müllverwertung dadurch im Vorteil,
. dass aus dem Müll ein für die öffentiche Versorgung geeignetes Brenngas erzeugt werden kann und nicht - wie in allen oben genannten Müllverwertungsverfahren - eine Beschränkung auf die Elektrizitäts- und Fernwärmeversorgung gegeben ist,
. dass durch die gasförmige Bereitstellung der Energie in großem Umfang Kosten für die elektrische Fernverteilung, und für die Fernwärme eingespart werden können und die Elektrizität und Wärmeerzeugung dezentraliert vorgenommen werden kann,
. dass durch die mögliche Dezentralisierung der Elektrizitätserzeugung Notstromaggregate eingespart werden können,
. dass durch die mögliche dezentralisierte Anordnung der Kraftwerke Großkraftwerke eingespart und die Gasgeneratoren an den Standorten ausgedienter Kohlekraftwerke errichtet werden können,
. dass die Kohlevergasung in der Rombination mit der - unverzichtbaren - Müllentsorgung nunmehr kostengünstig und wettbewerbsfähig angeboten werden kann,
. dass - zur Deckung von Lastspitzen im Gasbedarf des öffentlichen Netzes - Kohle jeder Qualität und in jedem beliebigen Verhältnis zusammen mit dem Müll verwertet werden kann, und nicht eine Beschränkung der Anlagen auf den Müll bzw. auf die Kohle - wie in allen anderen thermischen Müll- bzw. Kohleverwertungsverfahren gegeben ist,
. dass etwa 95 % der im Müll enthaltenen Energie über den Vergasungsprozess nutzbar gemacht werden kann und nicht - wie im Verfahren 2 b - ein erheblicher Teil des Energiegehalts in einem energetisch nicht verwertbaren Reststoff zurückbleibt,
. dass die Gasreinigung im extrem kleinen Gasvolumen erfolgen kann und nicht - wie in den Verfahren 1 und 2 a - im großen bzw. - im Verfahren 2 b - im vergrößerten Gasvolumen,
. dass die Gasreinigung verhältnismäßig unproblematisch ist, da nur etwa 5 % der reaktiven Stoffe der Verbrennung zugeführt werden und daher nur in diesem Umfang eine Oxidation stattfindet und nicht - wie in den Verfahren 1 und 2 a - zu 100 %,
. dass das Rauchgasvolumen äußerst gering ist, nämlich nur etwa 3 % desjenigen der Verfahren 1 und 2 a,
. dass zur Entschwefelung (des Rohgases) nur eine einfache Wäsche erforderlich ist und keine aufwendige Rauchgasentschwefelungsanlage mit Kalkeinsatz und Gipsentsorgung wie bei den Verfahren 1 und 2 a,
. dass bei der Verbrennung des Brenngases in den dezentralisierten Verbrauchsstellen wegen der schadstoffarmen Verbrennung des Wasserstoffs auf Katalysatoren verzichtet und die Verbrennungsmotoren der Kraftwerke auf Magergemischbasis betrieben werden können und nicht, wie in den Verfahren 1 und 2 a, Katalysatoren erforderlich sind,
. dass durch den auf etwa 5 % reduzierten Verbrennungsanteil und die mögliche Verbrennung in der Wirbelschichtfeuerung die Stickoxidabgaben gering zu veranschlagen sind und nicht - wie im Verfahren 1 und besonders im Verfahren 2 a - durch hohe Verbrennungstemperaturen mit bedeutenden Stickoxidabgabendazu in großen geodätischen Höhen (Hochkamine - Bildung von Photooxidantien - Waldsterben) - zu rechnen ist.

Zur Erfindung gehören auch die in den Ansprüchen angegebene Verwendung von Zwischenprodukten und des Endprodukts.

Das Verfahren bis einschließlich zur Erzeugung des Rohgases, vorzugsweise auch des Reingases und der Verbrennung der Vergasungsreststoffe und weiterer Stoffe in einer Hochtemperatur Schmelzkammer -Feuerung oder Wirbelschichtfeuerung wird zwar zweckmäßigerweise im Rahmen einer einzigen Anlage ausgeführt. Es ist jedoch auch möglich, den Verschwelungsreststoff entweder zwischenzulagern und zu einem geeigneten Zeitpunkt der Vergasungsstufe zuzuführen, oder aber an einen anderen Ort zu transportieren und dort einer Vergasungsanlage zuzuführen. Die Hochtemperatur-Feuerung befindet sich im letztgenannten Fall vorzugsweise an dem Ort, an dem sich die Vergasungsvorrichtung befindet.

Bei der Erfindung können Müll und Kohle (z.B. Steinkohle oder Braunkohle) gemeinsam in einem beliebigen Verhältnis eingetragen werden. Das erfindungsgemäße Verfahren verwendet vorzugsweise den aus der Müllverschwelung bekannten allothermen Schwelgaserzeuger und den aus der Kohlevergasung bekannten allothermen Rohgaserzeuger zusammen mit einer Reihe weiterer

Bauteile in einer auf die Verfahrensziele abgestimmten, neuartigen Anordnung.

Das Verschwelen wird zweckmäßig so gesteuert, daß möglichst viel Schwelgas entsteht und lediglich feste Bestandteile als Verschwelungsreststoff übrig bleiben. Die Verschwelung erfolgt vorzugsweise ungefähr bei Atmosphärendruck.

Mit dem erfindungsgemäßen Verfahren kann ein für die öffentliche Versorgung geeignetes Brenngas mit einem Heizwert von 4,6 kWh/m³ und mit folgender chemischer Zusammensetzung erzeugt werden: Wasserstoff 83 %, Methan 16 %, Stickstoff 1 %.

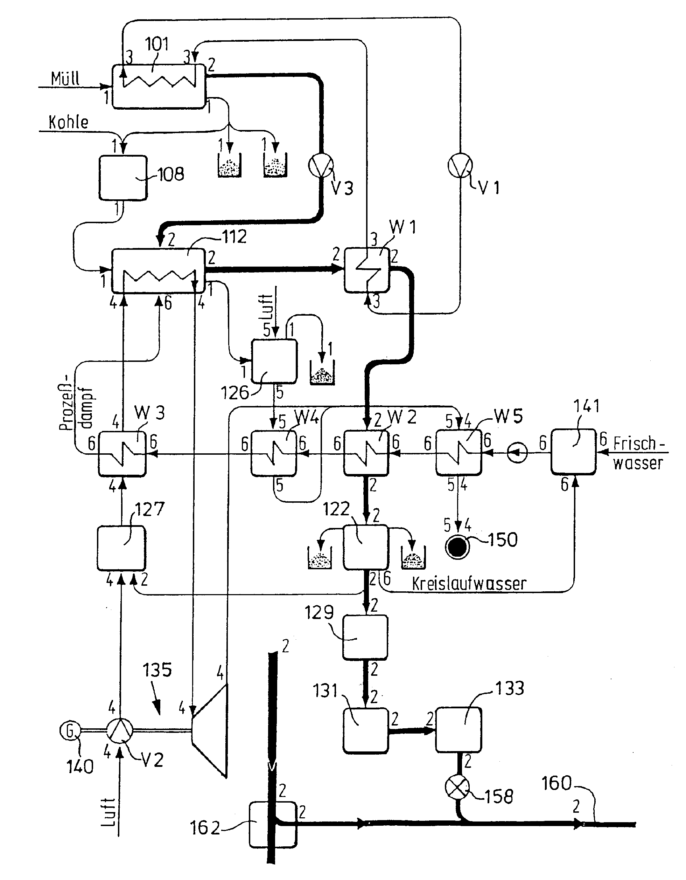

Weitere Merkmale und Vorteile der Erfindung ergeben sich aus der folgenden Beschriebung eines Ausführungsbeispiels der Erfindung anhand der zeichnung, die erfindungswesentliche Einzelheiten zeigt, und aus den Anpsrüchen. Die einzelnen Merkmale können je einzeln für sich oder zu mehreren in beliebiger Kombination bei einer Ausführungsform der Erfindung verwirklicht sein. Die Figur
zeigt schematisch die Funktionsblöcke einer ersten Anlage zur Verwertung von energiehaltigen Müll, und die Kopplung dieser Funktionsblöcke.

Der Weg der verschiedenen Stoffe in der Anlage ist durch Pfeile dargestellt. Diese Pfeile sind im Fall des Transports eines Gases als Rohrleitungen zu verstehen, im Fall des Transports von Feststoffen kann es sich hierbei stattdessen auch um Förderbänder oder andere Transportvorrichtungen handeln.

Anhand der Figur wird die Vorrichtung und das auf dieser ausgeführte Verfahren beschrieben. Dabei werden die Pfade der einzelnen Stoffe ebenfalls beschrieben. Jeder Pfad hat eine Nummer von 1 bis 6, die in der Figur zur Kennzeichnung der Pfade verwendet werden.

### . Feststoff-Pfad (1)

- Der Einsatzmüll wird in die rotierende Trommel eines Schwelgaserzeugers 101 eingebracht und am anderen Ende ausgetragen. Der Schwelgaserzeuger 101 arbeitet im Beispiel bei etwa 450 Grad C und einem Druck von 1 bar, also Atmosphärendruck. Aus dem Austrag werden die Metalle und Inertien (Glas, Steine) aussortiert. Der verbleibende Verschwelungsreststoff wird zusammen mit der Einsatzkohle in einer Mühle 108 zu Staub vermahlen. Der Staub gelangt zur Vergasung in einen Rohgaserzeuger 112, der bei etwa 850 Grad C und 10 bar arbeitet. Der Vergasungsreststoff wird aus dem Rohgaserzeuger 112 ausgetragen und in eine Wirbelschicht-Brennkammer 126 eingebracht. Die Asche wird aus der Wirbelschicht-Brennkammer ausgetragen.

### . Brenngas-Pfad (2)

- Das im Schwelgaserzeuger 101 entstehende Schwelgas wird über einen Verdichter V3 zum Rohgaserzeuger 112 geleitet. Das dort entstehende Rohgas überträgt in einem Wärmetauscher W1 einen Teil seiner fühlbaren Wärme auf das Wärmeträgergas 1 (Pfad 3) und einen weiteren Teil in einem zweiten Wärmetauscher W2 auf den Prozessdampf (Pfad 5). Danach wird das Rohgas in einer Reinigungsvorrichtung 122 gereinigt, die Schwefel und giftige Bestandteile des Rohgases abscheidet. Der kleine Teil des Reingases strömt zu einer Brennkammer 127 zur Erzeugung des Wärmeträgergases 2 (Pfad 4). Der große Teil des Reingases strömt zu einer Vorrichtung 129 zur Kohlenmonoxid-Konvertierung, die das giftige CO mit Wasser in H₂ und CO₂ umwandelt. Danach wird das Kohlendioxid ausgewaschen (CO₂-Auswaschvorrichtung 131) und das Reingas einem Speicher 133 zugeführt. Dort wird es für den öffentlichen Bedarf entnommen und über eine Druckausgleichsvorrichtung 158 in ein Gasnetz 160 mit einem Betriebsdruck von z.B. 8 bar eingespeist, das über eine Ferngas-Übernahmestation 162 mit einem Ferngasnetz mit einem Betriebsdruck von z.B. 40 bar in Verbindung ist. Das Reingas hat im Beispiel einen Heizwert von 4,6 kWh/m³ und folgende chemische Zusammensetzung: Wasserstoff 83 %, Methan 16 %, Stickstoff 1 %.

### . Wärmeträgergas-1-Pfad (3)

Das Wärmeträgergas 1 wird im Wärmetauscher W1 vom Rohgas (Pfad 2) erwärmt und gibt die aufgenommene Wärme im Schwelgaserzeuger 101 wieder ab. Es kehrt sodann zum Wärmetauscher zurück, usw. Es wird von einem Verdichter V1 bewegt.

### . Wärmeträgergas-2-Pfad (4)

- Über den Verdichter V2 des Expansions-Gasturbosatzes 135 wird Luft auf den erforderlichen Druck komprimiert und in der anschließenden Brennkammer 127 mit Reingas überstöchiometrisch zum Wärmeträgergas 2 verbrannt. Das Wärmeträgergas 2 gibt einen Teil seiner fühlbaren Wärme im Dampfüberhitzer W3 an den Prozessdampf (Pfad 6) ab. Mit einem weiteren Teil seiner fühlbaren Wärme deckt es den Wärmebedarf des Rohgaserzeugers 112 ab. Danach dient es im Expansions-Turbosatz 135 zum Antrieb des Verdichters V2 und des Stromerzeugers 140 und schließlich zur Vorwärmung des Speisewassers für den Prozessdampf (Pfad 6) und gelangt zu einem Kamin 150.

### . Wärmeträgergas-3-Pfad (5)

- Von der Wirbelschicht-Brennkammer 126 wird Luft angesaugt und mit dem Vergasungsreststoff aus dem Feststoff-Pfad (1) zum Wärmeträgergas 3 verbrannt. Das Wärmeträgergas 3 überträgt seine fühlbare Wärme auf den Prozessdampf (Pfad 6) über zwei Wärmetauscher W4, W5 und strömt durch den Kamin 150 ab, wobei erforderlichenfalls eine Entgiftung vorgenommen werden kann.

### . Prozessdampf-Pfad (6)

- Frischwasser und Abwasser aus der Reinigungsstufe des Brenngas-Pfads (2) werden in der Wasseraufbereitung 141 aufbereitet und in den vier Wärmetauschern W5, W2, W4, W3 des Pfads 6 vorgewärmt, verdampft und überhitzt. Der überhitzte Prozessdampf wird in den Rohgaserzeuger 112 geleitet. In der Rohgasreinigung 122 wird ein Teil des Prozesswassers zurückgewonnen und der Wasseraufbereitung zugeführt (Kreislaufwasser).

Im Beispiel ist der Schwelgaserzeuger 101 eine Drehtrommel mit Röhrenwärmetauscher, und der Rohgaserzeuger 112 ist ein Wasserdampf-Wirbelschicht-Reaktor mit Röhrenwärmetauscher.

Zugesetzte Kohle hat im gemahlenen Zustand zweckmäßig eine Korngröße von etwa maximal 1 mm. Nach derzeitiger Kenntnis wird die optimale maximale Korngröße des gemahlenen Verschwelungsreststoffes etwas kleiner sein als 1 mm, es werden jedoch Werte von mehr als 1 mm nicht ausgeschlossen.

## Patentansprüche

1. Verfahren zür Erzeugung eines für die öffentliche Versorgung geeigneten Brenngases aus energiehaltigem Müll oder aus energiehaltigem Müll zusammen mit Kohle, dadurch gekennzeichnet, dass
- aus dem Müll in einem von außen beheizten Schwelgaserzeuger unter Abschluss von Luft bzw. Sauerstoff (allotherm) ohne Vergasungsmittel ein Schwelgas und ein Verschwelungsreststoff erzeugt werden,
- der Verschwelungsreststoff ohne Kohle oder mit einer beliebigen Menge beigemischter Kohle in einer Mühle zu einem feinkörnigen Mahlgut, nachfolgend als Staub bezeichnet, vermahlen wird,
- aus dem Schwelgas und dem Staub in einem von außen beheizten Rohgaserzeuger unter Abschluss von Luft bzw. Sauerstoff (allotherm) mit Wasser als Vergasungsmittel ein Rohgas und ein Vergasungsreststoff erzeugt werden, wobei die fühlbare Wärme des Rohgases zur Beheizung des Schwelgaserzeugers und zur Erhitzung des aus dem Wasser erzeugten Prozessdampfes verwendet wird,
- aus dem Rohgas durch Reinigung ein Reingas erzeugt wird,
- und aus dem Vergasungsreststoff in einer Vergasungsreststoff-Brennkammer ein Rauchgas (Wärmeträgergas) erzeugt wird.

2. Verfahren nach Anspruch 1, dadurch gekennzeichnet, dass als Schwelgaserzeuger eine Drehtrommel mit Röhrenwärmetauscher verwendet wird.

3. Verfahren nach einem der vorhergehenden Ansprüche, dadurch gekennzeichnet, dass als Rohgaserzeuger ein Wasserdampf-Wirbelschicht-Reaktor mit Röhrenwärmetauscher verwendet wird.

4. Verfahren nach einem der vorhergehenden Ansprüche, dadurch gekennzeichnet, dass als Vergasungsreststoff-Brennkammer eine Wirbelschicht-Feuerung oder eine Hochtemperatur-Schmelzkammer-Feuerung verwendet wird.

5. Verfahren nach einem der vorhergehenden Ansprüche, dadurch gekennzeichnet, dass die fühlbare Wärme des Rauchgases (Wärmeträgergases) aus der Vergasungsreststoff-Brennkammer zur Erhitzung des Prozessdampfes verwendet wird.

6. Verfahren nach einem der vorhergehenden Ansprüche, dadurch gekennzeichnet, dass aus dem Reingas durch Kohlenmonoxidkonvertierung und durch Kohlendioxidwäsche ein für die öffentliche Versorgung geeignetes Brenngas erzeugt wird.

7. Verfahren nach einem der vorhergehenden Ansprüche, dadurch gekennzeichnet, dass ein Teil des Reingases in einer Reingas-Brennkammer verbrannt und das damit erzeugte Rauchgas (Wärmeträgergas) nacheinander zur Beheizung des Rohgaserzeugers, zum Antrieb einer Expansionsgasturbine und zur Erhitzung des Prozessdampfs verwendet wird.

8. Verfahren nach Anspruch 7, dadurch gekennzeichnet, dass die Expansionsgasturbine einen Verdichter für den Heizkreislauf des Rohgaserzeugers antreibt.

9. Verfahren nach einem der vorhergehenden Ansprüche, dadurch gekennzeichnet, dass der Rohgaserzeuger bei einem Druck von weniger als 20 bar, vorzugsweise weniger als 10 bar, vorzugsweise etwa bei Atmosphärendruck betrieben wird.

10. Vorrichtung zur Durchführung des Verfahrens nach einem der Ansprüche 1 bis 9, dadurch gekennzeichnet, dass sie einen allothermen (unter Abschluss von Luft bzw. Sauerstoff arbeitenden und mit Wärmetauscher zur Eintragung der Prozesswärme ausgestatteten) Schwelgaserzeuger (101), einen allothermen Rohgaserzeuger (112), eine Vergasungsreststoff-Brennkammer (126) und dass sie Wärmetauscher (W1,W2) zur Übertragung der fühlbaren Wärme des Rohgases auf den Schwelgaserzeuger (101) und auf den Prozessdampf aufweist.

11. Vorrichtung nach Anspruch 10, dadurch gekennzeichnet, dass sie eine Mühlenanlage (108) zur Vermahlung des Verschwelungsreststoffs und erforderlichenfalls der Kohle aufweist.

12. Vorrichtung nach Anspruch 10 oder 11, dadurch gekennzeichnet, dass sie zur Verbrennung des Vergasungsreststoffs eine Wirbelschicht-Brennkammer (126) oder eine Hochtemperatur--Schmelz-Brennkammer aufweist.

13. Vorrichtung nach einem der Ansprüche 10 bis 12 dadurch gekennzeichnet, dass sie Wärmetauscher (W4,W5) zur Übertragung der in der Vergasungsreststoff-Brennkammer (126) erzeugten Wärme auf den Prozessdampf aufweist.

14. Vorrichtung nach einem der Ansprüche 10 bis 13, dadurch gekennzeichnet, dass sie eine Anlage (122) zur Reinigung des Rohgases aufweist.

15. Vorrichtung nach einem der Ansprüche 10 bis 14, dadurch gekennzeichnet, dass sie für einen Teilstrom des Reingases eine Reingas-Brennkammer (127) aufweist.

16. Vorrichtung nach einem der Ansprüche 10 bis 15, dadurch gekennzeichnet, dass sie Wärmetauscher zur Übertragung der in der Reingas-Brennkammer (127) erzeugten Wärme auf den Rohgaserzeuger und auf den den Prozessdampf aufweist.

17. Vorrichtung nach einem der Ansprüche 10 bis 16, dadurch gekennzeichnet, dass sie eine Expansionsgasturbine (135) und einen Verdichter (V2) für den Heizkreislauf des Rohgaserzeugers (112) aufweist.

## Claims

1. Method for producing from refuse containing energy, or from refuse containing energy in combination with coal, a fuel gas suited for public utility purposes, characterised in that
- a low-temperature gas and a low-temperature carbonization residue are produced from the refuse in an externally heated low-temperature gas generator in the absence of air and/or oxygen (allothermal process), and without any gasification medium,
- the low-temperature carbonization residue is ground in a mill, either without or with the addition of a desired quantity of coal, to a fine-grained material, hereinafter referred to as dust,
- a crude gas and a gasification residue are produced from the low-temperature gas and the dust, in an externally heated crude gas generator, in the absence of air and/or oxygen (allothermal process), with water as a gasification medium, with the sensible heat of the crude gas being used for heating the low-temperature generator and for heating the process steam produced from the water,
- a pure gas is produced from the crude gas by purification, and
- a flue gas (thermal gas) is produced from the gasification residue in a gasification-residue combustion chamber.

2. Method according to claim 1, characterised in that a rotary drum with tubular heat exchanger is used as a lowtemperature gas generator.

3. Method according to any of the preceding claims, characterised in that a water vapor fluid-bed reactor with tubular heat exchanger is used as a crude gas generator.

4. Method according to any of the preceding claims, characterised in that a liquid-bed furnace or a hightemperature slag-tap furnace is used as a gasificationresidue combustion chamber.

5. Method according to any of the preceding claims, characterised in that the sensible heat of the flue gas (thermal gas) from the gasification-residue combustion chamber is used for heating the process steam.

6. Method according to any of the preceding claims, characterised in that a fuel gas suited for public utility purposes is produced from the pure gas by carbon monoxide conversion and carbon dioxide purification.

7. Method according to any of the preceding claims, characterised in that part of the pure gas is burnt in a pure-gas combustion chamber, and the flue gas (thermal gas) resulting from this process is used successively for heating the crude gas generator, for driving an explosion gas turbine and for heating the process steam.

8. Method according to claim 7, characterised in that the explosion gas turbine drives a compressor for the heating circuit of the crude gas generator.

9. Method according to any of the preceding claims, characterised in that the crude gas generator is operated at a pressure of less than 20 bar, preferably less than 10 bar, preferably at or about atmospheric pressure.

10. Device for carrying out the method according to any of claims 1 to 9, characterised in that the device comprises an allothermal low-temperature gas generator (101) (operating in the absence of air and/or oxygen, and equipped with a heat exchanger supplying the necessary process heat), an allothermal crude gas generator (112), a gasification-residue combustion chamber (126) and heat exchangers (W1, W2) for transmitting the sensible heat of the crude gas to the low-temperature generator (101) and to the process steam.

11. Device according to claim 10, characterised in that it comprises a mill plant (108) for grinding the low-temperature carbonization residue and, if necessary, the coal.

12. Device according to any of claims 10 to 11, characterised in that it comprises a fluid-bed combustion chamber (126) or a high-temperature slag-tap furnace for burning the gasification residue.

13. Device according to any of claims 10 to 12, characterised in that it comprises heat exchangers (W4, W5) for transmitting to the process steam the heat generated in the gasification-residue combustion chamber (126).

14. Device according to any of claims 10 to 13, characterised in that it comprises a purification plant (122) for the crude gas.

15. Device according to any of claims 10 to 14, characterised in that it comprises a pure-gas combustion chamber (127) for a partial flow of the pure gas.

16. Device according to any of claims 10 to 15, characterised in that it comprises heat exchangers for transmitting to the crude-gas exchanger and to the process steam the heat generated in the pure-gas combustion chamber (127).

17. Device according to any of claims 10 to 16, characterised in that it comprises an explosion gas turbine (135) and a compressor (V2) for the heating circuit of the crude-gas generator (112).

## Revendications

1. Procédé de production d'un gaz combustible approprié pour la distribution publique à partir d'ordures contenant de l'énergie ou d'ordures contenant de l'énergie conjointement à du charbon, caractérisé en ce que :
- à partir des ordures, on produit un gaz de distillation lente et un résidu de carbonisation lente dans un générateur de gaz de distillation lente chauffé de l'extérieur, en l'absence d'air et respectivement d'oxygène (de façon allothermique), sans agent de gazéification,
- le résidu de carbonisation lente est, sans charbon ou avec une quantité quelconque de charbon ajouté, moulu dans un moulin en une matière moulue à grains fins, désignée dans la suite par poussière,
- à partir du gaz de distillation lente et de la poussière on produit un gaz brut et un résidu de gazéification dans un générateur de gaz brut chauffé de l'extérieur, en l'absence d'air et respectivement d'oxygène (de façon allothermique), avec de l'eau comme agent de gazéification, la chaleur sensible du gaz brut étant utilisée pour chauffer le générateur de gaz de distillation lente et pour chauffer la vapeur du processus produite à partir de l'eau,
- à partir du gaz brut on produit un gaz pur par purification, et
- à partir du résidu de gazéification on produit un gaz de fumée (gaz caloporteur) dans une chambre de combustion de résidu de gazéification.

2. Procédé suivant la revendication 1, caractérisé en ce que, comme générateur de gaz de distillation lente, on utilise un tambour rotatif à échangeur de chaleur tubulaire.

3. Procédé suivant l'une des revendications précédentes, caractérisé en ce que, comme générateur de gaz brut, on utilise un réacteur à lit fluidisé et à vapeur d'eau comportant un échangeur de chaleur tubulaire.

4. Procédé suivant l'une des revendications précédentes, caractérisé en ce que, comme chambre de combustion de résidu de gazéification, on utilise un chauffage à lit fluidisé ou un foyer à cendres fondues à haute température.

5. Procédé suivant l'une des revendications précédentes, caractérisé en ce que la chaleur sensible du gaz de fumée (gaz caloporteur) provenant de la chambre de combustion de résidu de gazéification est utilisée pour le chauffage de la vapeur de processus.

6. Procédé suivant l'une des revendications précédentes, caractérisé en ce que, à partir du gaz pur, on produit un gaz combustible approprié pour la distribution publique par conversion de monoxyde de carbone et par lavage de dioxyde de carbone.

7. Procédé suivant l'une des revendications précédentes, caractérisé en ce qu'une partie du gaz pur est brûlée dans une chambre de combustion de gaz pur et en ce que le gaz de fumée ainsi produit (gaz caloporteur) est utilisé successivement pour le chauffage du générateur de gaz brut, pour l'entraînement d'une turbine à gaz d'expansion et pour le chauffage de la vapeur de processus.

8. Procédé suivant la revendication 7, caractérisé en ce que la turbine à gaz d'expansion actionne un compresseur pour le circuit chaud du générateur de gaz brut.

9. Procédé suivant l'une des revendications précédentes, caractérisé en ce que le générateur de gaz brut est mis en service à une pression infèrieure à 20 bars, de préférence inférieure à 10 bars, de préférence environ à la pression atmosphérique.

10. Dispositif pour la mise en oeuvre du procédé suivant l'une des revendications 1 à 9, caractérisé en ce qu'il comporte un générateur de gaz de distillation lente allothermique (101) (qui fonctionne en l'absence d'air et respectivement d'oxygène et est équipé d'un échangeur de chaleur pour l'introduction de la chaleur de processus), un générateur de gaz brut allothermique (112), une chambre de combustion de résidu de gazéification (126) et des échangeurs de chaleur (W1, W2) pour la transmission de la chaleur sensible du gaz brut au générateur de gaz de distillation lente (101) et à la vapeur de processus.

11. Dispositif suivant la revendication 10, caractérisé en ce qu'il présente une installation de broyage (108) pour moudre le résidu de distillation lente et dans le cas où cela est nécessaire le charbon.

12. Dispositif suivant l'une des revendications 10 et 11, caractérisé en ce qu'il présente une chambre de combustion à lit fluidisé (126) ou une chambre de combustion-fusion à haute température, pour la combustion du résidu de gazéification.

13. Dispositif suivant l'une des revendications 10 à 12, caractérisé en ce qu'il présente des échangeurs de chaleur (W4, W5) pour la transmission de la chaleur, produite dans la chambre de combustion de résidu de gazéification (126), à la vapeur de processus.

14. Dispositif suivant l'une des revendications 10 à 13, caractérisé en ce qu'il présente une installation (122) pour la purification du gaz brut.

15. Dispositif suivant l'une des revendications 10 à 14, caractérisé en ce qu'il présente une chambre de combustion de gaz pur (127) pour un courant partiel du gaz pur.

16. Dispositif suivant l'une des revendications 10 à 15, caractérisé en ce qu'il présente des échangeurs de chaleur pour la transmission de la chaleur, produite dans la chambre de combustion de gaz pur (127), au générateur de gaz brut et à la vapeur de processus.

17. Dispositif suivant l'une des revendications 10 à 16, caractérisé en ce qu'il présente une turbine à gaz d'expansion (135) et un compresseur (V2) pour le circuit chaud du générateur de gaz brut (112).
